# EUROPÄISCHE PATENTSCHRIFT

(11) **EP 0 607 875 B1**
(45) Veröffentlichungstag und Bekanntmachung des Hinweises auf die Patenterteilung: **30.07.1997**
(21) Anmeldenummer: 94100466.5
(22) Anmeldetag: 14.01.1994
(51) Int. Cl.: H02H 9/04

(54) **Schutzschaltungsanordnung**
Protective circuit arrangement
Circuit de protection

(30) Priorität: 21.01.1993 DE 4301551
(43) Veröffentlichungstag der Anmeldung: 27.07.1994
(73) Patentinhaber: TEMIC TELEFUNKEN microelectronic GmbH, 74072 Heilbronn (DE)
(72) Erfinder: Golberg, Hans-Joachim, D-89079 Ulm (DE)

(56) Entgegenhaltungen:
- FR-A- 2 374 793
- US-A- 4 930 036

## Beschreibung

Die Erfindung betrifft eine Schutzschaltungsanordnung nach dem Oberbegriff des Patentanspruches 1. Die US- Patentschrift US-A-4 930 036 offenbart eine Schutzschaltungsanordnung mit den Merkmalen, die im Oberbegriff des Anspruchs 1 enthalten sind.

Eine derartige bekannte Schutzschaltungsanordnung in einer Grundausführung mit einem Längswiderstand und je einer Diode in zwei Querzweigen am Ausgang ist zum Schutz von nachgeschalteten Einrichtungen gegen elektrostatische Entladungen gebräuchlich und z.B. in der US-A 5 124 877 beschrieben.

Aus der DD 28 02 202 A1 und der DE 2 754 409 A1 sind Anordnungen bekannt, bei welchen zwei dieser vorgenannten Grundausführungen in Serie geschaltet sind in der Weise, daß im Längszweig zwei Widerstände in Serie liegen und beide Anschlüsse des einrichtungsseitigen Widerstands über zwei Querzweige mit je einer Diode an Ableitpotentiale angeschlossen sind.

Der Erfindung liegt die Aufgabe zugrunde, eine Schutzschaltungsanordnung anzugeben, welche sowohl gegen elektrostatische Entladungen als auch gegen energiereiche Störimpulse aus niederohmigen Störquellen wirkungsvoll schützt.

Die Erfindung ist im Patentanspruch 1 beschrieben. Die Unteransprüche enthalten vorteilhafte Ausgestaltungen und Weiterbildungen der Erfindung.

Die erfindungsgemäße Schutzschaltungsanordnung ist insbesondere zum Schutz analoger und digitaler integrierter Schaltungen gegen hochenergetische Störimpulse aus niederohmigen Störquellen und gegen elektrostatische Entladungen, wie sie typischerweise beim Einsatz in Kraftfahrzeugen auftreten, geeignet. Sie können z.B. als Interfaces zwischen einem elektrischen System und daran angeschlossenen Sensoren oder zwischen räumlich getrennten Systemen, die über störanfällige Leitungen miteinander verbunden sind, verwendet werden.

Die erfindungsgemäße Schaltungsanordnung ermöglicht eine Anpassung an die zu bewältigende Störsituation, insbesondere bei Auftreten sowohl elektrostatischer als auch niederohmiger Störquellen, mit dem Ziel der Minimierung der zu bewältigenden Verlustleistung und eine Verteilung der Verlustleistung auf eine Mehrzahl von Schaltungselementen.

Dies ist insbesondere von Bedeutung für eine Schaltungsausführung in integrierter Schaltungstechnik.

Die Schutzschaltungsanordnung kann günstigerweise einzeln, als Baugruppe aus mehreren gleichartigen Anordnungen oder zusammen mit den zu schützenden nachgeschalteten Einrichtungen monolithisch integriert werden.

Die Erfindung ist nachfolgend anhand von Beispielen unter Bezugnahme auf die Abbildungen noch eingehend veranschaulicht. Dabei zeigt:
- FIG. 1: eine bekannte Schutzschaltungsanordnung.
- FIG. 2: eine Ausführungsform der Erfindung.
- FIG. 3: eine Erweiterung der Anordnung nach FIG.2.
- FIG. 4: eine Baugruppe mit mehreren Schutzschaltungsanordnungen.

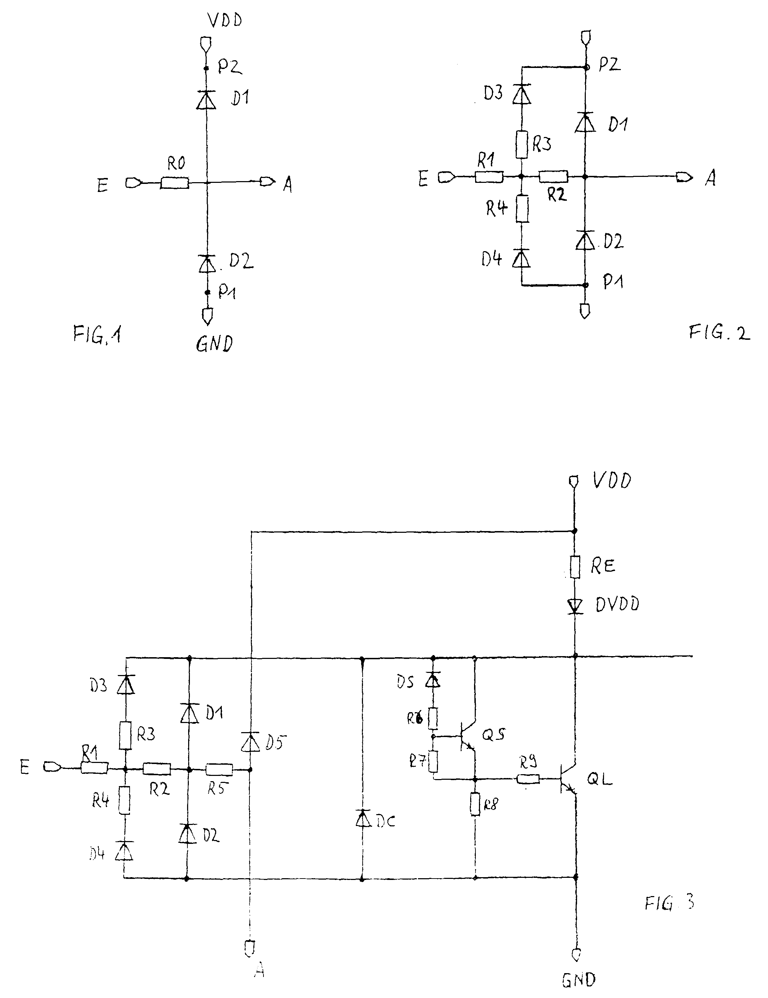

Die bekannte Anordnung nach FIG.1 weist einen zwischen Eingangsanschluß E und Ausgangsanschluß A der Anordnung liegenden Längswiderstawnd RO auf. Der Ausgangsanschluß A ist zur Verbindung mit dem Eingang einer nachgeschalteten Einrichtung, die gegen Störimpulse geschützt werden soll, vorgesehen. Der Ausgang A ist über je eine von zwei Dioden D1 und D2 mit den beiden Ableitpunkten P1 und P2 verbunden, deren Ableitpotentiale beispielsweise auf den Versorgungspotentialen GND und VDD der nachgeschalteten Einrichtung liegen. Die Dioden sind bezüglich einer im störungsfreien Zustand zwischen P2 und P1 liegenden Spannung in Sperrichtung gepolt.

Am Eingang E auftretende Störimpulse, die größer als die Versorgungsspannung zwischen P2 und P1 sind, werden durch die Diode D1 auf die positive Versorgungsleitung an P2 abgeleitet. Der Widerstand R1 dient als Strombegrenzung und bestimmt den Innenwiderstand der Schutzschaltung im Störfall. Negative Störimpulse werden durch die Diode D2 auf die Versorgungsleitung an P1, die als Masseleitung angenommen sei und auch als Bezugspotential für die Störimpulse im vorstehenden Sinne gelte, abgeleitet. Zum Schutz gegen elektrostatische Entladungen, die als Hochspannungspulse aus einer hochohmigen Störquelle behandelt werden können, wird RO niederohmig, beispielsweise < 100 Ohm dimensioniert, so daß nur eine geringe Verlustleistung an RO anfällt.

Die in FIG.2 skizzierte erfindungsgemäße Schutz-Schaltungsanordnung zeigt demgegenüber zwei in Serie zwischen dem Eingang E und dem Ausgang A liegende Längswiderstände R1 und R2, deren Verbindungspunkt über je eine Zweigleitung mit einer Reihenschaltung eines Widerstands R3 bzw. R4 und einer Diode D3 bzw. D4 mit den Ableitpunkten P1, P2 verbunden ist.

Die Dioden D3, D4 in den Zweigleitungen werden vorzugsweise oberhalb einer Durchbruchsspannung, die höher ist als die Versorgungsspannung, auch in Sperrichtung leitend, so daß die Störimpulsableitung dann über drei Dioden erfolgt. Der Innenwiderstand der skizzierten Anordnung ergibt sich im wesentlichen aus einer Parallelschaltung der Widerstände R2, R3, R4 in Serie mit dem eingangsseitigen Längswiderstand R1. Der Innenwiderstand kann so dimensioniert werden, daß die Verlustleistung in der Schutzschaltungsanordnung für eine bestimmte Verteilung der Störimpulse minimal wird, insbesondere kann die Dimensionierung so erfolgen, daß die Verlustleistungsaufnahme für elektrostatische Störungen und Impulse aus niederohmigen Störquellen ungefähr gleich groß ist. Vorzugsweise sind die Widerstände R2, R3, R4 bei Realisierung als monolithisch integrierte Widerstände aus Gründen der Flächeneffizienz gleich groß und so dimensioniert, daß sie eine gleich große Verlustleistung aus den Störimpulsen aufnehmen wie R1. In einer vorteilhaften Ausführungsform weisen die Widerstände R2, R3, R4 ungefähr denselben Widerstandswert R und der Längswiderstand R1 demgegenüber einen wesentlich kleineren Wert von 0,1-0,2R auf. Die Dioden D1 bis D4 sind ausreichend groß zu wählen, um eine thermische Überlastung zu vermeiden.

Für den Fall, daß die Versorgungsspannung zwischen VDD und GND nicht direkt aus einer sehr niederohmigen Spannungsquelle stammen sondern z.B. durch eine Spannungsregelschaltung aus einer höheren Spannung abgeleitet sind, kann die Ableitung leistungsstarker Störungen, insbesondere bei mehreren Schutzschaltungsanordnungen, bei direkter Verbindung beider Ableitpunkte P1, P2 mit den beiden Versorgungspotentialen zu einer Überlastung und evtl. auch zu einer Zerstörung einer solchen Regelschaltung führen. Derartige Regelschaltungen sind gebräuchlich in Kraftfahrzeugen, um aus der Bordnetzspannung eine stabilisierte Spannung von z.B. 5V für den Betrieb integrierter Schaltungen zu gewinnen.

Eine bevorzugte Ausführungsform, sieht daher vor, die Spannung zwischen den Ableitpunkten durch eine Begrenzungsschaltung zu begrenzen und vorteilhafterweise das Versorgungspotential am Ausgang einer solchen Reglerschaltung (oder einer anderen durch die Ableitung der Störimpulse gefährdeten Schaltung) von den abgeleiteten Störimpulsen weitgehend freizuhalten und die Störimpulse jeweils gegen die Masseleitung abzuleiten.

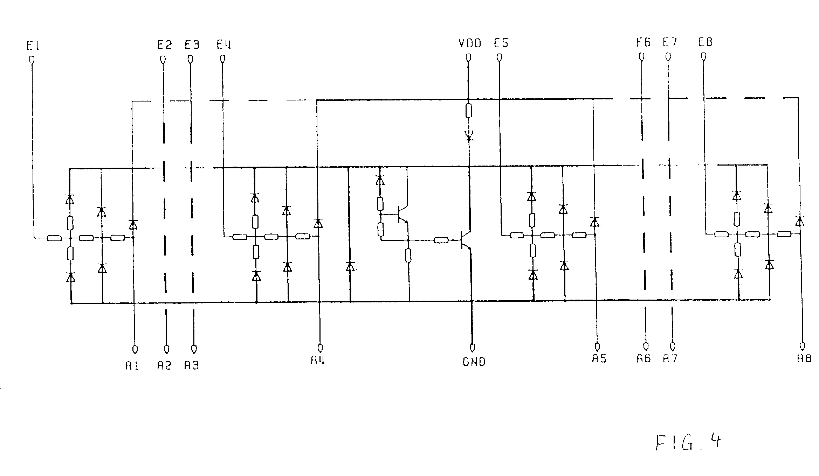

Ein vorteilhaftes Beispiel ist in FIG.3 skizziert. Der eine Ableitpunkt P1 ist direkt mit dem Massepotential GND der nachgeschalteten Einrichtungen verbunden. Deren anderes Versorgungspotential VDD sei beispielsweise durch einen überlastempfindlichen Regler bereitgestellt. Der andere Ableitpunkt P2 ist nicht direkt mit dem anderen Versorgungspotential VDD verbunden, sondern über eine Reihenschaltung einer Diode DVDD und eines Widerstands RE. Eine Begrenzerschaltung mit einer Zenerdiode DS, Widerständen R6, R7, R8, R9 und Transistoren QS, QL begrenzt die positive Spannung zwischen P2 und P1 auf einen Wert der vorteilhafterweise gleich oder geringfügig größer als die Versorgungsspannung ist. Im störungsfreien Zustand liegt der Ableitpunkt P2 dann auf Versorgungspotential VDD und die Schutzschaltungsanordnung ist stromlos. Bei positiven Störimpulsen verhindert die Diode DVDD einen Stromfluß vom Ableitpunkt P2 zum Versorgungspotential VDD und damit z.B. in einen Regler. Die auf P2 geleiteten Anteile der Störimpulse führen zum Ansprechen der Begrenzungsschaltung und werden zum Massepotential GND abgeleitet, wobei der Ableitstrom nahezu ausschließlich durch den Leistungstransistor QL der durch QS und QL gebildeten Darlingtonschaltung fließt. Der Leistungstransistor QL ist vorzugsweise in der Form mehrerer verteilter Einzeltransistoren realisiert, wobei dann der ebenfalls verteilte Widerstand Rg als Kompensationswiderstand zu in den Emitterleitungen des Leistungstransistors QL auftretenden unterschiedlichen Leitungswiderständen dient, um die Strombelastung der Teiltransistoren annähernd gleich zuhalten. Eine weitere Abschirmung einer nachgeschalteten Einrichtung gegen positive Störimpulse kann mittels eines zusätzlichen Längswiderstand R5 vom Verbindungspunkt der Dioden D1, D2 zum Ausgang A und einer Diode D5 zum Versorgungspotential VDD erreicht werden. Wenn die positive Spannung zwischen P2 und P1 nicht wesentlich über die Versorgungsspannung steigt, bleibt der Spannungsabfall an R5 gering, so daß dieser niederohmig ausgeführt werden kann und die Übertragungsbandbreite der Schutzschaltungsanordnung nur wenig beeinflußt wird.

Negative Störimpulse werden über die Dioden D2, D4 zum Massepotential GND und bei Durchbruch der Diode D3 über die parallel zur Begrenzungsschaltung liegende Diode DC auch über den Ableitpunkt P2 zum Massepotential abgeleitet. Die Diode DC stellt sicher, daß das Potential an P2 nicht wesentlich unter Massepotential absinkt. Der Widerstand RE begrenzt den Strom aus dem Versorgungspotential und damit die Belastung des Reglers.

Schutzschaltungsanordnungen der beschriebenen Art können vorteilhafterweise zu mehreren als Baugruppe monolithisch integriert werden, welche dann wie in FIG. 4 für eine Baugruppe mit acht einzelnen Schutzschaltungsanordnungen skizziert, deren Ableitpunkte untereinander verbunden sind, getrennte Ein-und Ausgänge E1 bis E8 bzw. A1 bis A8 aufweist und die die Begrenzungsschaltung, die Leistungsdiode DC und die Reihenschaltung zwischen Versorgungspotential und Begrenzungsschaltung nur einfach enthält.

## Patentansprüche

1. Schutzschaltungsanordnung zum Schutz einer nachgeschalteten Einrichtung,
- mit einem den Eingang (E) der Schutzschaltung mit einem ersten Verbindungspunkt verbindenden ersten Längswiderstand (R1),
- mit zwei vom ersten Verbindungspunkt zu zwei Ableitpunkten (P1, P2) abgehenden Zweigleitungen aus jeweils einer Diode (D3, D4) und jeweils einem zur Diode (D3, D4) in Reihe geschalteten Querwiderstand (R3, R4), wobei die Dioden (D3, D4) bzgl. an den Ableitpunkten (P1, P2) anliegenden Ableitpotentialen in Sperrichtung gepolt sind und
- mit zwei von einem mit dem Ausgang (A) der Schutzschaltung verbundenen zweiten Verbindungspunkt zu den Ableitpunkten (P1, P2) abgehenden weiteren Zweigleitungen, die jeweils eine in Sperrichtung gepolte Diode (D1, D2) aufweisen,
dadurch gekennzeichnet,
- daß der erste Verbindungspunkt über einen zweiten Längswiderstand (R2) mit dem zweiten Verbindungspunkt verbunden ist und
- daß ein Störimpuls über drei der Dioden (D1, D2, D3, D4) derart ableitbar ist, daß die Diode (D3, D4) aus einer von den beiden vom ersten Verbindungspunkt abgehenden Zweigleitungen in Sperrichtung leitend ist.

2. Anordnung nach Anspruch 1, dadurch gekennzeichnet, daß der eine Ableitpunkt (P1) unmittelbar auf einem der Betriebspotentiale (GND) liegt.

3. Anordnung nach Anspruch 2, dadurch gekennzeichnet, daß der andere Ableitpunkt (P2) über eine weitere Reihenschaltung einer Diode (DVDD) und eines Widerstands (RE) mit dem anderen Betriebspotential (VDD) verbunden ist.

4. Anordnung nach einem der Ansprüche 1 bis 3, gekennzeichnet durch einen dritten niederohmigen Längswiderstand (R5) zwischen dem Verbindungspunkt der ersten Dioden (D1, D2) und dem Ausgangsanschluß (A) und eine zusätzliche Diode (D5), die den Ausgang direkt mit dem anderen Betriebspotential (VDD) verbindet.

5. Anordnung nach einem der Ansprüche 1 bis 4 dadurch gekennzeichnet, daß eine Begrenzungsschaltung die Spannung zwischen den Ableitpunkten begrenzt.

6. Anordnung nach Anspruch 5, dadurch gekennzeichnet, daß der Begrenzungsschaltung eine entgegen der Betriebsspannung gepolte Leistungsdiode (DC) parallel geschaltet ist.

7. Anordnung nach einem der Ansprüche 1 bis 6, dadurch gekennzeichnet, daß die Dioden (D3, D4) aus den vom ersten Verbindungspunkt abgehenden Zweigleitungen eine Durchbruchspannung aufweisen, die über der Betriebsspannung und der Ansprechspannung der Begrenzerschaltung liegt.

8. Anordnung aus mehreren Schaltungsanordnungen nach einem der Ansprüche 1 bis 7, deren Ein-und Ausgänge getrennt und deren Ableitpunkte untereinander verbunden sind und welche die ggf. vorhandene Begrenzerschaltung, Leistungsdiode (DC) und weitere Reihenschaltung (RE, DVDD) nur einmal aufweisen.

## Claims

1. A protective circuit arrangement for protecting a downstream device
- with a first series resistor (R1) which connects the input (E) of the protective circuit to a first connection point,
- with two branch lines which lead from the first connection point to two discharge points (P1, P2) and each comprise a diode (D3, D4) and a shunt resistor (R3, R4) connected in series with the diode (D3, D4), where the diodes (D3, D4) are poled in the blocking direction in respect of discharge potentials applied to the discharge points (P1, P2) and
- with two further branch lines which lead from a second connection point, connected to the output (A) of the protective circuit, to the discharge points (P1, P2) and which each comprise a diode (D1, D2) poled in the blocking direction,
characterised in that
- the first connection point is connected to the second connection point via a second series resistor (R2) and
- that an interference pulse is dischargeable via three of the diodes (D1, D2, D3, D4) in such manner that the diode (D3, D4) of one of the two branch lines leading from the first connection point is conductive in the blocking direction.

2. An arrangement according to Claim 1, characterised in that the first discharge point (P1) is directly connected to one of the operating potentials (GND).

3. An arrangement according to Claim 2, characterised in that the other discharge point (P2) is connected to the other operating potential (VDD) via a further series arrangement of a diode (DVDD) and a resistor (RE).

4. An arrangement according to one of Claims 1 to 3, characterised by a third low-ohmic series resistor (R5) between the connection point of the first diodes (D1, D2) and the output terminal (A) and by an additional diode (D5) which connects the output directly to the other operating potential (VDD).

5. An arrangement according to one of Claims 1 to 4, characterised in that a limiting circuit limits the voltage between the discharge points.

6. An arrangement according to Claim 5, characterised in that a power diode (DC) of opposite polarity to the operating voltage is connected in parallel to the limiting circuit.

7. An arrangement according to one of Claims 1 to 6, characterised in that the diodes (D3, D4) of the branch lines leading from the first connection point possess a breakdown voltage which exceeds the operating voltage and the response voltage of the limiting circuit.

8. An arrangement comprising a plurality of circuit arrangements according to one of Claims 1 to 7, whose inputs and outputs are separate and whose discharge points are connected to one another and which comprise the optionally provided limiting circuit, power diode (DC) and further series arrangement (RE, DVDD) only singly.

## Revendications

1. Circuit de protection pour protéger un dispositif monté en aval
- comportant une première résistance (R1) montée dans le sens du passage du courant et reliant l'entrée (E) du circuit de protection avec un premier point de liaison,
- comportant deux lignes formant un branchement et allant du premier point de liaison aux deux points de dérivation (P1, P2), ainsi que, chacune, une résistance (R3, R4) montée, dans le sens transversal au passage du courant, en série avec la diode (D3, D4), les diodes (D3, D4) étant montées avec leurs pôles en sens inverse par rapport aux potentiels de dérivation apparaissant aux points de dérivation (P1, P2) et
- comportant deux autres lignes formant un branchement, qui vont d'un second point de liaison, lié à la sortie (A) du circuit de protection, aux points de dérivation (P1, P2) et présentent chacune une diode (D1, D2) dont les pôles sont montés en sens inverse,
caractérisé
- par le fait que le premier point de liaison est relié au second point de liaison par l'intermédiaire d'une seconde résistance (R2) montée dans le sens de passage du courant et
- qu'une impulsion perturbatrice peut être dérivée, par l'intermédiaire de trois des diodes (D1, D2, D3, D4) du fait que la diode (D3, D4) de l'une des deux lignes, formant branchement, partant du premier point de liaison, est montée en sens inverse.

2. Dispositif selon la revendication 1, caractérisé par le fait que le premier point de dérivation (P1) se trouve directement à l'un des potentiels d'exploitation (GND).

3. Dispositif selon la revendication 2, caractérisé par le fait que l'autre point de dérivation (P2) est relié à l'autre potentiel d'exploitation (VDD) par l'intermédiaire d'un autre circuit de série constitué d'une diode (DVDD) et d'une résistance (RE).

4. Dispositif selon l'une des revendications 1 à 3, caractérisé par une troisième résistance à faible valeur de résistance (R5), montée, dans le sens de passage du courant, entre le point de liaison des premières diodes (D1, D2) et la borne de sortie (A) et par une diode supplémentaire (D5) qui relie directement la sortie à l'autre potentiel d'exploitation (VDD).

5. Dispositif selon l'une des revendications 1 à 4, caractérisé par le fait qu'un circuit de limitation limite la tension entre les points de dérivation.

6. Dispositif selon la revendication 5, caractérisé par le fait que, parallèlement au circuit de limitation, une diode de puissance (DC) est montée avec ses pôles en sens opposé à la tension d'exploitation.

7. Dispositif selon l'une des revendications 1 à 6, caractérisé par le fait que les diodes (D3, D4) des lignes, formant branchement, partant du premier point de liaison, présentent une tension de claquage qui est supérieure à la tension d'exploitation et à la tension de réaction du circuit de limitation.

8. Dispositif constitué de plusieurs circuits de protection selon l'une des revendications 1 à 7, dont les entrées et les sorties sont séparées et dont les points de dérivation sont reliés entre eux et qui ne présentent simplement que le circuit de limitation éventuellement existant, la diode de puissance (DC) et un autre circuit de série (RE, DVDD).
